# EUROPEAN PATENT APPLICATION

(11) **EP 4 466 971 A1**
(43) Date of publication of application: **27.11.2024**
(21) Application number: 24177630.1
(22) Date of filing: 23.05.2024
(51) Int. Cl.: A01B 69/04, G05D 1/242, G05D 1/648

(54) **METHOD OF REPEATEDLY WORKING A FIELD BY MEANS OF AN UNMANNED, SELF-PROPELLED AGRICULTURAL VEHICLE AND UNMANNED, SELF-PROPELLED AGRICULTURAL VEHICLE CONFIGURED TO PERFORM THE METHOD**

(30) Priority: 25.05.2023 NL 2034914
(71) Applicant: Lely Patent N.V., 3147 PB Maassluis (NL)
(72) Inventor: OOSTERBAAN, Robin, 3147 PB Maassluis (NL)
(74) Representative: Octrooibureau Van der Lely N.V.

(57) **Abstract**

In a method of repeatedly working a field (2) by means of an unmanned, self-propelled agricultural vehicle (1), comprising working the field (2) in a first working run (3) with a first working pattern having a number of first non-overlapping passes covering a first part of the field (2), subsequently working the field in up to an n-th working run (4) with an n-th working pattern having a number of n-th non-overlapping passes, said number of n-th passes in each working run together covering an n-th part of the field (2), n being an integer greater than 1, so that after the n-th working run (4) substantially the whole field (2) is covered at least once, the n-th working patterns in the n working runs are substantially different for each value of n.

The invention also relates to an unmanned, self-propelled agricultural vehicle (1) configured to perform the method.

## Description

The present invention relates to a method of repeatedly working a field by means of an unmanned, self-propelled agricultural vehicle.

Such methods are known in the art. Typically, a working run having a certain working pattern consisting of a number of passes is being repeated, for example every week or every year. The passes can be overlapping, so that in one working run a certain strip or part of the field is worked twice or more, or they can be non-overlapping. In applications like fertilizing, a field is worked frequently and it can be undesirable, or even illegal, to use overlapping passes in one working run as this may strain the soil and/or impair the crop. Soil compaction can also be a problem. In order to be able to use non-overlapping passes and still cover the whole field, it is often necessary to use expensive, adjustable machinery and to adjust the agricultural vehicle, because there is no working pattern that fits the field. This is cumbersome and undesirable.

There is a need for a more simple and improved method.

It is an object of the present invention to provide such an improved method.

The invention achieves the object at least in part by means of a method according to claim 1, in particular a method of repeatedly working a field by means of an unmanned, self-propelled agricultural vehicle, comprising working the field in a first working run with a first working pattern having a number of first non-overlapping passes covering a first part of the field, subsequently working the field in up to an n-th working run with an n-th working pattern having a number of n-th non-overlapping passes, said number of n-th passes in each working run together covering an n-th part of the field, n being an integer greater than 1, so that after the n-th working run substantially the whole field is covered at least once, wherein the n-th working patterns in the n working runs are substantially different for each value of n.

The invention is based on the insight that using working runs with different working patterns, each covering a part of the field and together covering the whole field, enables the use of non-overlapping passes within each working run without the need to use expensive, adjustable machinery and to adjust the agricultural vehicle. In this way, a simple, yet effective method is realized. Besides, the different working patterns contribute substantially to the avoidance of soil compaction.

The invention also relates to an unmanned, self-propelled agricultural vehicle configured to perform the method.

Suitable and advantageous embodiments are described in the dependent claims, as well as in the description below.

According to a first embodiment of the invention, the n working runs are repeatedly performed. This has proven to give excellent results, as a further adaptation in the course of time is not necessary.

According to a further embodiment, in each working run the non-overlapping passes extend substantially in parallel. This is a relatively cheap solution which has proven to give satisfactory results, especially in rectangular fields.

In yet another embodiment, all the non-overlapping passes in all the working patterns extend substantially in parallel. This is a very simple, yet highly efficient implementation.

Advantageously, the working patterns are convertible into one another by means of a translation in a direction perpendicular to the direction of the passes. In this way, the navigation of the agricultural vehicle is easy to program and to implement.

In a further embodiment, for each value of n the surface of the n-th part of the field is larger than half the surface of the field. This further enhances the efficiency of the method.

According to yet a further embodiment, the non-overlapping passes are chosen such that after the n working runs the field is substantially evenly covered. In this way, a relatively uniform working of the field is achieved.

In an unmanned, self-propelled agricultural vehicle comprising a frame with propelling means and control means with navigation means, the control means with navigation means are configured to make the vehicle perform the method according to one of the previously described embodiments. Thus, an efficient agricultural vehicle is provided.

Advantageously, the unmanned, self-propelled agricultural vehicle is an automatic fertilizer spreader. This embodiment has given good results.

In a further embodiment, the automatic fertilizer spreader is connectable to a field conduit for transporting liquid fertilizer to a field. The method according to the invention has proven to be highly effective for use in such a system.

The invention will now be further explained with reference to the following Figures, which schematically illustrate the method and the vehicle according to the invention.
Figure 1 schematically shows an agricultural vehicle working a field in accordance with the invention; and
Figure 2 shows an agricultural vehicle according to the invention.

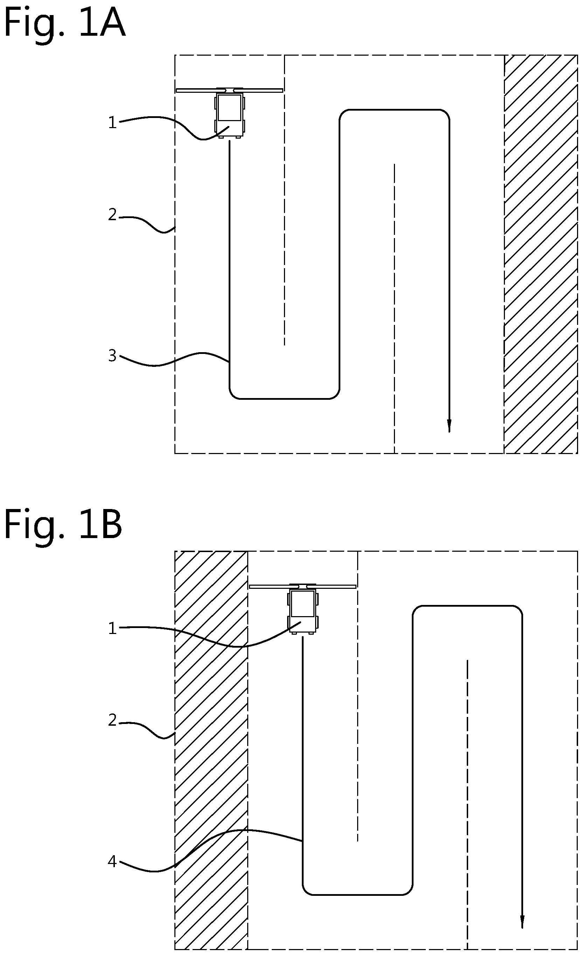

In Figure 1 (1A and 1B) an unmanned, self-propelled agricultural vehicle 1 is depicted working a field 2. Vehicle 1 comprises a frame with propulsion means (known as such and not shown, e.g. an electric motor), wheels (e.g. two wheels provided on each lateral side of the vehicle 1) or other supporting and moving elements for the frame (e.g. caterpillar tracks), control means with navigation means (known as such and not shown, e.g. a computer cooperating with a GPS), and field working means. In the example shown the vehicle 1 is an automatic sprayer, a machine that is used to apply herbicides, pesticides, and/or fertilizers on agricultural crops.

Other examples of automatic agricultural vehicles 1 can be a fertilizer spreader or a forage harvester provided with harvesting means, like forage mowing and collecting means.

Such machines are used to automatically work a field in a working run having a certain working pattern consisting of a number of passes. The working run is being repeated, for example every year, or every week. In applications like fertilizing or spraying, a field is worked relatively frequently and it can be undesirable, or even illegal (often depending on local legislation relating to fertilizing or spraying), to use overlapping passes in one working run, as this may strain the soil and/or impair the crop. For a forage harvester it is undesirable to use overlapping passes for efficiency reasons.

In order to be able to use non-overlapping passes and still cover the whole field, it is often necessary to use an expensive, sophisticated, adjustable vehicle and to adjust the agricultural vehicle, because there is no working pattern that fits the field. For example, a sprayer with activatable and deactivatable sprayer boom segments can be used. The boom segments can then be adjusted to fit the form of the field. Various hardware solutions are possible in order to be able to avoid overlapping passes in a working run, but these are generally expensive. Besides, adjusting the equipment is onerous.

In accordance with the invention, working a field without overlapping passes is made possible with simple equipment and without any hardware adaptations to the machinery involved by using a plurality of working runs with different working patterns.

The vehicle 1 has two foldable spray booms (known as such) which, together, define the working width of the sprayer. In the example shown in Figure 1A the unmanned, self-propelled agricultural vehicle 1 works the field 2 in a first working run schematically illustrated with the arrow 3. This first working run 3 has a first working pattern essentially consisting of 3 first non-overlapping straight passes (connected by turns) which run substantially in parallel and cover a first part of the field 2. At the right side of Figure 1A there is a part of the field 2 (a strip at the right side) which is not covered in this first working run 3. The working width of the vehicle 1 is too large.

In Figure 1B the unmanned, self-propelled agricultural vehicle 1 works the field 2 in a second working run 4. This second working run has a second working pattern essentially consisting of 3 second non-overlapping straight passes (again, connected by turns) which run substantially in parallel and cover a second part of the field 2. At the left side of Figure 1B there is a part of the field 2 (a strip) which is not covered in this second working run 4, as the vehicle 1 starts the second working run 4 at a starting point differing from the one in the first working run 3. The starting point in the second working run 4 is chosen so that the 3 following parallel second working passes substantially cover the entire remaining right part of the field 2.

The first and second working patterns in the two working runs 3, 4 are substantially different. After the second working run 4 substantially the whole field 2 is covered. The largest central part of the field 2 has been covered twice, the strips at the left and right side only once. These two working runs with 6 passes in total can now be repeated. So in this case the number n of working runs equals two.

In order to achieve a more uniform coverage of the field 2, it is also possible to use more than 2 working runs. For example, the strip which is not covered in the first working run 3 could be shifted to the left over the working width of the vehicle 1 in a second working run (not shown), then again shifted to the left over the working width of the vehicle 1 in a third working run (not shown), then again shifted to the left over the working width of the vehicle 1 in a fourth working run (which would correspond to the second working run 4 shown in Figure 1B). In that way, with 12 passes in total in the 4 working runs the whole field 2 would be covered 3 times, with 3 narrow strips being covered 4 times. So in this case the number n of working runs equals four.

Of course, other (higher) values for the number n are also possible. With trial and error, or with the aid of software, numerous other suitable working patterns within the scope of the invention can be found. The n working runs can be performed repeatedly if the results are satisfactory and a further adaptation in the course of time is not necessary. Alternatively, a different working pattern may be chosen.

The various working runs and working patterns are programmed and stored in the control means with navigation means of the vehicle 1, which are operatively connected to the propulsion means and to the wheels. In a known manner, the control and navigation means may be assisted by sensors (provided on board vehicle 1 or separately) sensing the environment of the vehicle 1 as it moves in the field 2, although the use of GPS may suffice in many modern machines.

For example, at the lower front end of the vehicle 1 a Lidar sensor can be provided. Lidar (acronym of light (or laser imaging) detection and ranging) is a well-known method for determining ranges (variable distance) by targeting an object with a laser and measuring the time for the reflected light to return to the receiver. Lidar can also be used to make digital 3-D representations of areas, due to differences in laser return times, and by varying laser wavelengths.

A Lidar sensor generates a point cloud: a set of data points characterising the vehicle environment. Reference data relating to the area boundaries are stored in the control means with navigation means and can be compared to the gathered vehicle environment data in order to determine the position of the vehicle 1 in the area.

In principle, the point cloud is generated in 3D. In an alternative embodiment, vehicle environment data are gathered by means of a cheaper and simpler laser scan sensor which performs a 2D laser scan in a substantially horizontal plane. Performing a 2D laser scan requires less computing power than generating a 3D point cloud.

It is noted that the control means with navigation means can be provided on the vehicle 1, but they could also be provided separately and communicate with the vehicle 1, preferably via a wireless connection.

The invention can be used advantageously in rectangular fields. In that case, in each working run the non-overlapping passes can extend substantially in parallel. This is a relatively cheap solution which has proven to give satisfactory results. In different working runs the non-overlapping passes may extend e.g. perpendicular to one another. In a view from above, the first working run can have passes extending horizontally, while in a further working run the passes extend vertically.

In another embodiment, all the non-overlapping passes in all the working patterns extend substantially in parallel. This is a very simple, yet highly efficient implementation. The working patterns can be convertible into one another by means of a translation in a direction perpendicular to the direction of the passes. In this way, the navigation of the agricultural vehicle is easy to program and to implement.

Advantageously, for each value of n the surface of the n-th part of the field is larger than half the surface of the field. This further enhances the efficiency of the method. Each working run can cover at least half the surface of the field.

Of course, the non-overlapping passes are chosen such that after the n working runs the field is substantially evenly covered. In this way, a relatively uniform working of the field is achieved. Suitable working patterns can be found by trial and error, or with the aid of software.

In non-rectangular fields the method according to the invention can also be applied. The choice of appropriate working patterns is, of course, more complex when a field is of irregular shape, but usually a field can be subdivided into field subparts that are at least approximately rectangular.

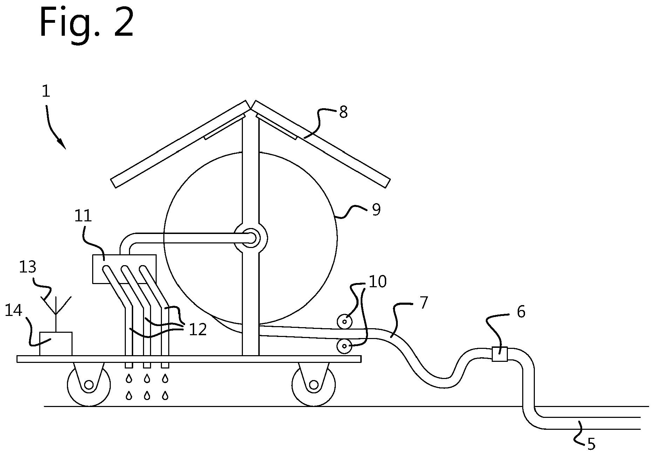

Figure 2 shows an agricultural vehicle according to the invention. The vehicle 1 is an autonomously moveable fertilizer spreader. An underground field conduit 5 is suitable for transporting fertilizer (or a solution containing fertilizer) from a fertilizer station (not shown) to the field 2. The field conduit 5 has a connection point 6 on the field 2. The vehicle 1 is connectable to the field conduit 5 at the connection point 6 via a flexible hose 7. A battery (not shown) is used to power an electric motor for driving the wheels of the vehicle 1. The battery can be charged with the aid of solar cells 8.

When the vehicle 1 is moved over the field 2 the flexible hose 7 is actively unrolled from hose reel 9 by means of driven guide rolls 10. Via the flexible hose 7 liquid fertilizer reaches distributor valve 11, from where it is distributed equally to a plurality of dosing elements 12 which ensure a uniform distribution of the fertilizer over the full working width of the vehicle 1 onto the field 2.

With the aid of a GPS receiver 13 the position of the vehicle 1 in the field is determined and the vehicle 1 is navigated. Control means with navigation means 14 are provided for data management, navigation and control of all electric motors. The control means with navigation means of the unmanned, self-propelled agricultural vehicle 1 are configured to make the vehicle 1 perform the method according to the invention.

In case the unmanned, self-propelled agricultural vehicle 1 is an automatic fertilizer spreader as shown in Figure 2, it is highly advantageous to use the method in accordance with the invention, as overlapping passes are undesirable. Adaptations to the working width of the vehicle 1 are thus not necessary.

### REFERENCE NUMERAL LIST

- 1: vehicle
- 2: field
- 3: first working run
- 4: second working run
- 5: field conduit
- 6: connection point
- 7: flexible hose
- 8: solar cells
- 9: hose reel
- 10: guide rolls
- 11: distributor valve
- 12: dosing elements
- 13: GPS receiver
- 14: control and navigation means

## Claims

1. Method of repeatedly working a field (2) by means of an unmanned, self-propelled agricultural vehicle (1), comprising working the field (2) in a first working run (3) with a first working pattern having a number of first non-overlapping passes covering a first part of the field (2), subsequently working the field in up to an n-th working run (4) with an n-th working pattern having a number of n-th non-overlapping passes, said number of n-th passes in each working run together covering an n-th part of the field (2), n being an integer greater than 1, so that after the n-th working run (4) substantially the whole field (2) is covered at least once, wherein the n-th working patterns in the n working runs are substantially different for each value of n.

2. Method according to claim 1, wherein the n working runs are repeatedly performed.

3. Method according to any one of claims 1 - 2, wherein in each working run the non-overlapping passes extend substantially in parallel.

4. Method according to any one of claims 1 - 3, wherein all the non-overlapping passes in all the working patterns extend substantially in parallel.

5. Method according to claim 4, wherein the working patterns are convertible into one another by means of a translation in a direction perpendicular to the direction of the passes.

6. Method according to any one of claims 1 - 5, wherein for each value of n the surface of the n-th part of the field (2) is larger than half the surface of the field (2).

7. Method according to any one of claims 1 - 6, wherein the non-overlapping passes are chosen such that after the n working runs the field (2) is substantially evenly covered.

8. Unmanned, self-propelled agricultural vehicle (1) comprising a frame with propelling means and control means with navigation means (14), wherein the control means with navigation means (14) are configured to make the vehicle (1) perform the method according to one of claims 1 - 7.

9. Unmanned, self-propelled agricultural vehicle according to claim 8, wherein the vehicle is an automatic fertilizer spreader (1).

10. Unmanned, self-propelled agricultural vehicle according to claim 9, wherein the automatic fertilizer spreader (1) is connectable to a field conduit (5) for transporting liquid fertilizer to a field (2).
